# EUROPÄISCHE PATENTSCHRIFT

(11) **EP 2 597 344 B1**
(45) Veröffentlichungstag und Bekanntmachung des Hinweises auf die Patenterteilung: **08.01.2014**
(21) Anmeldenummer: 11009383.8
(22) Anmeldetag: 25.11.2011
(51) Int. Cl.: F16L 5/08, F16L 5/10, E04G 15/06, H02G 3/12

(54) **Verwendung eines Adapterrings zum Einsetzen in ein Rohrelement einer Leitungsdurchführung**
Use of an adapter ring to be inserted into a pipe element of a lead-through for conduits
Utilisation d'une bague d'adaptation destinée à l'installation dans un élément de tuyau d'un passage de conduite

(43) Veröffentlichungstag der Anmeldung: 29.05.2013
(73) Patentinhaber: Hauff-Technik GmbH & Co. KG, 89542 Herbrechtingen (DE)
(72) Erfinder: Senol, Egritepe, 89520 Heidenheim (DE)
(74) Vertreter: Szynka, Dirk

(56) Entgegenhaltungen:
- EP-A1- 0 899 493
- EP-A1- 2 338 658
- WO-A1-96/25616
- WO-A1-03/025446
- AT-B- 238 521
- DE-U1- 8 510 354
- DE-U1-202004 011 202
- US-A- 2 538 043

## Beschreibung

Die vorliegende Erfindung betrifft die Verwendung eines Adapterrings zum Einsetzen in ein Rohrelement einer Leitungsdurchführung.

Leitungsdurchführungen der vorliegenden Art werden üblicherweise in ein Wandelement einbetoniert, also in einer entsprechenden Schalung vorgesehen, die dann mit Beton aufgefüllt wird. Das Rohrelement, für welches gewöhnlich ein starres Material vorgesehen ist, hält hierbei und nach dem Aushärten des Betons eine Durchgangsöffnung zwischen den beiden Seiten des so hergestellten Wandelements frei.

An einer Rohrelementinnenwand sind umlaufend verteilt eine Mehrzahl Vorsprünge vorgesehen, die mit in das Rohrelement einsetzbaren Systemdeckeln nach Art eines Bajonettverschlusses zusammenwirken. An den Systemdeckeln sind also die Vorsprünge berücksichtigende Vertiefungen ausgebildet, sodass ein Systemdeckel in Leitungsrichtung in das Rohrelement eingeschoben und dann durch Drehen in Umlaufrichtung darin arretiert werden kann. Dabei sind Vorsprung und Ausnehmung üblicherweise derart ausgebildet, dass sie In der verdrehten Position miteinander verrasten.

Beim Einbetonieren der Leitungsdurchführung ist nun zunächst ein Systemdeckel eingesetzt, der das Rohrelement vorübergehend verschließt, und zwar als mit einer Wandseite bündiger Verschlussdeckel. Nach dem Einbetonieren wird dieser Verschlussdeckel durch einen Systemdeckel mit einer Durchlassöffnung und einer an diese anschließenden Schrumpfschlauch-Hülse ersetzt: die Leitung wird dann durch die Schrumpfschlauch-Hülse hindurchgefädelt. Nach einem Aufschrumpfen der Schrumpfschlauch-Hülse ist der Systemdeckel dann zur Leitung hin gedichtet.

Die WO 96/25616 A1 zeigt ein in eine Wand einbetoniertes Rohrelement, durch welches eine Leitung hindurchgeführt und mittels einer Pressdichtung dagegen gedichtet wird. Der Elastomerkörper der Pressdichtung ist aus zwei ineinander gesetzten Elastomerkörperteilen mit jeweils einer exzentrisch darin vorgesehenen Durchgangsöffnung aufgebaut: das Innere Elastomerkörperteil ist in der Durchgangsöffnung des äußeren angeordnet, so dass aufgrund der Exzentrizität ein außermittiger Leitungsverlauf ausgeglichen werden kann.

Die WO 03/025446 A1 betrifft eine Pressdichtung, an deren Elastomerkörper innenund außenseitig zur Anpassung an den Querschnitt von Leitung und Laibung ablösbare Schalen vorgesehen sind.

Die DE 8510354 U1 beschreibt eine Durchführung mit zwischen Laibung und Pressdichtung vorgesehenen Teilkörpern; ein erster Teilkörper wird in der Laibung verschweißt, und anschließend, nach dem Einsetzen der Pressdichtung, wird ein weiterer Teilkörper mit dem ersten verschraubt.

Die DE 20 2004 011 202 U1 betrifft eine Pressdichtung mit in einer Durchgangsöffnung des Elastomerkörpers vorgesehenen Schalen, die zur Anpassung an eine Leitung größeren Querschnitts aus der Durchgangsöffnung genommen werden können.

Die EP 0 899 493 A1 zeigt eine Durchführung mit einem Rohrelement, in dem ein innenseitig umlaufender Vorsprung vorgesehen ist; eine im Elastomerkörper einer in das Rohrelement eingesetzten Pressdichtung außenseitig umlaufend vorgesehene Ringnut nimmt diesen Vorsprung auf.

Die AT 238 521 B beschreibt eine Hülse, die in ein in einem Bodenelement vorgesehenes Rohr eingeschoben wird und dieses zu einer hindurchgeführten Leitung hin dichtet.

Der vorliegenden Erfindung liegt die Aufgabe zugrunde, die Anwendungsmöglichkeiten einer derartigen Leitungsdurchführung mit Rohrelement zu verbessern.

Erfindungsgemäß löst diese Aufgabe die Verwendung eines Adapterrings zum Einsetzen in das Rohrelement der Leitungsdurchführung, wobei der Adapterring mit einer Adapterringaußenwand flächig an einer Rohrelementinnenwand anliegt und dabei eine von einer Adapterringinnenwand begrenzte Durchlassöffnung freigibt, in die eine Pressdichtung mit einem Elastomerkörper eingesetzt und so darin verspannt wird, dass der Elastomerkörper an der Adapterringinnenwand anliegt; der Adapterring ist als zu dem Elastomerkörper der Pressdichtung gesondertes Bauteil derart ausgelegt, dass er ohne eigene Verspanneinrichtung infolge einer Expansion des Elastomerkörpers senkrecht zur Leitungsrichtung gegen die Rohrelementinnenwand verpresst und so in der Durchlassöffnung gehalten wird.

Durch die erfindungsgemäße Verwendung eines Adapterrings erfährt ein standardmäßig eingesetztes Bauteil, also die Leitungsdurchführung, vorteilhafterweise eine Eignung dahingehend, dass es mit einem anderen, an sich ebenfalls bekannten Bauteil kombiniert werden kann (und kombiniert wird), und zwar mit der Pressdichtung. Der eingesetzte Adapterring überdeckt nämlich die an der Rohrelementinnenwand ausgebildeten Vorsprünge und stellt eine Durchlassöffnung zur Verfügung. In welche die Pressdichtung eingesetzt werden kann. Die ansonsten nur mit komplementären Systemdeckeln kombinierbare Leitungsdurchführung kann somit vorteilhafterweise mit einer Pressdichtung kombiniert werden, die ansonsten nur in Verbindung mit innenseitig glatt ausgebildeten Rohrelementen beziehungsweise Kernbohrungen eingesetzt werden kann.

Eine Pressdichtung ist ein Elastomerkörper, der etwa im Falle einer Durchgangsöffnung mit kreisförmigem Querschnitt zylinderförmig und mit einer Spanneinrichtung ausgebildet ist, wobei zum Beispiel an seinen Stirnseiten Spannplatten als in Leitungsrichtung spannende Spanneinrichtung vorgesehen sind. Diese wirken über den Elastomerkörper durchsetzende Bolzen zusammen, werden also etwa durch Anziehen der Bolzen beim Verspannen des Elastomerkörpers aufeinander zu bewegt. Infolge dieser Kompression in Leitungsrichtung expandiert der Elastomerkörper senkrecht dazu und legt sich dichtend an sowohl die Leitung als auch die Lalbung einer Kembohrung beziehungsweise bei erfindungsgemäßer Verwendung an die Adapter-ringinnenwand an.

Indem nun eine solche (konventionelle) Pressdichtung in ein ansonsten für Systemdeckel ausgelegtes Rohrelement einer Leitungsdurchführung gesetzt. werden kann, sind schon deren Anwendungsmöglichkeiten erweitert. Ferner kann ein beispielsweise vor dem Hindurchführen der Leitung, etwa eines Mittelspannungskabels , in das Rohrelement gesetzter und die an dem Rohrelement ausgebildeten Vorsprünge überdeckender Adapterring auch vorteilhaft sein, wenn es beim Durchziehen des Mittelspannungskabels zu einem Abrieb von am Kabelmantel haftenden Verschmutzungen kommt, also von beispielsweise Sand oder Lehm. Lagern sich solche Verschmutzungen an den Vorsprüngen ab, müssen diese, um wieder mit einem Systemdeckel verwendet werden zu können, nämlich zuvor aufwendig gereinigt werden. Von einer in bevorzugter Ausgestaltung als plane Kreiszylinderinnenmantelfläche ausgebildeten Adapterringinnenwand hingegen lassen sich solche Verschmutzungen beispielsweise leichter abwischen, sodass ein guter Kontakt zwischen Pressdichtung und Adapterring sichergestellt ist.

Zudem erlaubt eine (jedenfalls bei makroskopischer Betrachtung) plane Adapterringinnenwand ein leichtes Einschieben der Pressdichtung und stellt einen großflächigen Kontakt sicher. Müsste die Pressdichtung hingegen direkt in ein Rohrelement mit innenseitig als Teil eines Bajonettverschlusses ausgebildeten Vorsprüngen gesetzt werden, könnte sie entweder nur bis zu dem Vorsprung eingeschoben werden, was die in Leitungsrichtung genommene Länge der Dichtfläche begrenzt, oder müsste der senkrecht zur Leitungsrichtung genommene Durchmesser des Elastomerkörpers so verringert werden, dass er auch durch den Abschnitt des Rohrelements passt, der aufgrund der hineinragenden Vorsprünge einen verringerten Innendurchmesser aufweist. Um dann diesen entsprechend großen Spalt zwischen Rohrelementinnenwand und Elastomerkörper zu überbrücken, muss der Elastomerkörper stark verspannt werden, was im schlimmsten Fall zu einer Beschädigung des Elastomerkörpermaterials führen kann.

Das eben beschriebene, vorteilhafterweise sequentiell erfolgende Einsetzen von zunächst Adapterring und anschließend Pressdichtung ist möglich, weil die beiden bei der Montage als gesonderte, also nicht miteinander verbundene, Bauteile verfügbar sind und gehandhabt werden.

Weitere bevorzugte Ausgestaltungen finden sich in den weiteren abhängigen Ansprüchen und in der nachstehenden Beschreibung. Dabei wird auch weiterhin: nicht im Einzelnen zwischen der Beschreibung der erfindungsgemäßen Verwendung und eines entsprechendes Adapterrings unterschieden und ist die Offenbarung implizit im Hinblick auf sämtliche Kategorien zu verstehen.

In bevorzugter Ausgestaltung ist in der Adapterringaußenwand eine Ausnehmung vorgesehen, die einen an der Rohrelementinnenwand ausgebildeten Vorsprung aufnimmt. Wie bereits eingangs erwähnt, handelt es sich bei dem Vorsprung besonders bevorzugt um den "männlichen" Teil eines Bajonettverschlusses. Dies wird auch im Folgenden ohne einen jeweilig gesonderten Hinweis angenommen (gleichwohl Ist die erfindungsgemäße Verwendung auch mit Vorsprüngen eines anderen Verschlusstyps kombinierbar).

Ein Vorteil der in der Adapterringaußenwand ausgebildeten Ausnehmung kann schon darin bestehen, dass, weil sie den Vorsprung aufnimmt, ein "Durchdrücken" des Vorsprungs an der Adapterringinnenwand vermieden werden kann. Eine als plane Kreiszylindermantelinnenfläche ausgebildete Adapterringinnenwand ist somit beispielsweise auch nach dem Einsetzen des Adapterrings plan, also nicht durch den beziehungsweise die Vorsprünge zur Leitung hin gewölbt.

Ist beim Einsetzen des Adapterrings dessen Inneres, also die Durchlassöffnung, noch nicht mit der Pressdichtung gefüllt, kann der Adapterring beispielsweise auch lokal elastisch verformt, also beispielsweise nach innen gewölbt werden, bis der Vorsprung in der Ausnehmung sitzt. Andererseits könnte sich die Ausnehmung auch bis zu einer Stirnseite des Elastomerkörpers erstrecken, sodass der Adapterring eingeschoben wird: die Ausnehmung selbst könnte insofern sogar auch als "weiblicher" Teil eines Bajonettverschlusses ausgestaltet sein und der Adapterring entsprechend durch Einschieben und Drehen In dem Rohrelement fixiert werden.

Vorzugsweise ist die Ausnehmung jedoch zu beiden Stirnseiten des Adapterrings beabstandet, sodass dieser beim Einsetzen elastisch verformt wird, bevor der Vorsprung in die Ausnehmung rutscht. Ein Vorteil dieser Ausführungsform kann etwa darin bestehen, dass eine die Ausnehmung begrenzende Kante, die bezogen auf die Einsetzrichtung des Adapterrings rückseitig des Vorsprungs angeordnet ist, einen Anschlag für den Vorsprung darstellt und den Adapterring so gegen ein Verrutschen in beziehungsweise Herausrutschen aus dem Rohrelement sichert.

Ferner ist diese Ausführungsform vorteilhaft, weil im Bereich der Ausnehmung die Adapterringdicke zwar lokal verringert ist, so dieser Bereich verringerter Dicke jedoch kleingehalten werden kann, und zwar im Wesentlichen auf die Abmessungen des Vorsprungs begrenzt. Ein entsprechender Adapterring ist damit einerseits hinreichend stabll bei der Handhabung und liegt andererseits mit der Adapterringaußenwand weitgehend großflächig an dem Rohrelement an.

Die Shore-Härte des für den Adapterring vorgesehenen Kunststoffmaterials ist vorzugsweise so angepasst, dass sie größer als die des Eiastomerkörpers und kleiner als jene des Rohrelements ist. Dies erlaubt einen Kompromiss zwischen (noch) möglicher Verformbarkeit des Adapterrings einerseits und hinreichender Stabilität andererseits, auch zur Vermeidung einer übermäßigen Verformung des Adapterrings beim Verspannen. Die Shore-Härte des Kunststoffs beträgt in dieser Reihenfolge zunehmend bevorzugt mindestens 70, 75, 80 Shore und (von dieser Untergrenze unabhängig) zunehmend bevorzugt höchstens 95, (92,5), 90 Shore. Bevorzugt ist ein Kautschukmaterial, etwa Ethylen-Propylen-Dien-Kautschuk (EPDM), oder etwa ein Thermoplastischer Elastomer (TPE).

In bevorzugter Ausgestaltung ist an einer Stirnseite des Adapterrings ein äußerer, also bezogen auf die Leitung nach außen hervortretender, Kragen vorgesehen, und zwar besonders bevorzugt umlaufend. Dieser stellt einen Anschlag zur Verfügung, bis zu dem der Adapterring bei der Montage eingeschoben wird, und erleichtert einem Monteur so das Einsetzen des Adapterrings. Wird dann die Leitung hindurchgeführt, hält der Anschlag den Adapterring in Position und kann so vermeiden helfen, dass dieser in das Rohrelement hineinrutscht.

Bei den bisherigen Beispielen wurde auf einen Adapterring Bezug genommen, durch welchen die Leitung hindurchgeführt wird, beziehungsweise wurde eine entsprechende Verwendung beschrieben. Besonders bevorzugt verläuft durch den Adapterring jedoch eine Trennlinie, sodass er aufklappbar ist und auf die Leitung aufgesetzt wird; der Adapterring umschließt dann die Leitung, und zwar ohne dass zuvor ein Leitungsende hindurchgefädelt werden muss. Ein solcher aufklappbarer Adapterring kann selbstverständlich auch mit den vorstehend beschriebenen Merkmalen kombiniert beziehungsweise in entsprechender Weise verwendet werden.

Insbesondere die Möglichkeit, einen aufklappbaren Adapterring auf eine bereits verlegte Leitung zu setzen, bietet besondere Vorteile. Der Erfinder hat nämlich festgestellt, dass der Leitungsdurchführung entsprechende Systemdeckel zwar bei den Unternehmen eingesetzt werden, welche die Leitungsdurchführung baulich integrieren lassen, also bei Versorgungsuntemehmen. Bei Unternehmen hingegen, die dann auf der Baustelle die Kabel durch das Rohrelement führen (Elektroinstallationsunternehmen), sind die oftmals als Set mit der Leitungsdurchführung vertriebenen Systemdeckel üblicherweise nicht bevorratet. Da die Leitung jedoch notwendigerweise durch den zu der Leitungsdurchführung passenden Systemdeckel mit Schrumpfschlauch-Hülse gefädelt werden muss, ist zumindest ein Abstimmungsaufwand zwischen Installationsuntemehmen und Versorgungsuntemehmen erforderlich, was in der Praxis die Verlegung der Kabel oftmals verzögert.

Besonders vorteilhaft kann das nachträgliche Aufsetzen des Adapterrings auch bei der Verlegung einer besonders dicken Leitung, etwa eines Mittelspannungskabels, sein, weil die Leitung zunächst durch das Rohrelement allein (ohne Adapterring darin) geführt werden kann, dessen Innendurchmesser noch entsprechend groß ist. Der Innendurchmesser wird nämlich erst nachträglich, wenn die Leitung hindurchgeführt ist, mit dem Einsetzen des Adapterrings verkleinert.

In weiterer Ausgestaltung des Adapterrings mit Trennlinie bildet diese eine hinterschneidende Ausnehmung und einen dazu Im Eingriff passenden Vorsprung der sich gegenüberliegenden, durch die Trennlinie voneinander getrennten Kanten des Adapterrings. Nachdem der Adapterring also auf die Leitung gesetzt und die die Hinterschneidung bildenden Kanten in Anlage aneinander gebracht sind, ist der Adapterring aufgrund der Hinterschneidung geschlossen gehalten, jedenfalls bezogen auf in Umlaufrichtung wirkende, einen gewissen Grenzwert nicht überschreitende Kräfte.

Die Hinterschneidung kann beispielsweise auch in einer senkrecht zur Leitungsrichtung orientierten Schnittebene betrachtet als Profil der sich von Adapterringinnenwand zu Adapterringaußenwand erstreckenden Kanten ausgebildet sein; diese können beispielsweise nach Art eines Schwalbenschwanzes ineinandergreifen. Vorzugsweise ist die Hinterschneidung jedoch in der Umlauffläche ausgebildet, also in der Kreiszylindermantelfläche. In der zuvor genannten, senkrecht zur Leitungsrichtung orientierten Schnittebene können die Kanten dann auch gerade verlaufen.

Eine weitere Ausführungsform betrifft einen Adapterring mit einer angeschrägten Stirnseite; die Adapterringdicke nimmt also stirnseitig ab, und zwar von außen her. Der Adapterring kann dann in bevorzugter Ausgestaltung mit der angeschrägten Stirnseite in das Rohrelement eingeschoben werden, was beispielsweise das Hineinrutschen in das Rohrelement erleichtern kann.

Vorzugsweise ist das Rohrelement der Leitungsdurchführung baulich in ein Wandelement integriert, und zwar durch zunächst fließfähiges Material, welches dann erstarrt. Prinzipiell kommt hier beispielsweise auch ein Verschäumen, etwa mit PU-Schaum, infrage; vorzugsweise ist jedoch ein Material auf Zementbasis vorgesehen, etwa Mörtel, besonders bevorzugt Beton.

Bei der Leitung kann es sich beispielsweise um eine Stromleitung, Wasserleitung, Gasleitung oder Telekommunikationsleitung, insbesondere Glasfaser-basiert, beziehungsweise auch um ein Leerrohr zur Aufnahme einer solchen Leitung handeln.

Im Folgenden wird die Erfindung anhand von Ausführungsbeispielen näher erläutert, wobei die einzelnen Merkmale wie in der gesamten Offenbarung auch in anderen Kombinationen im Rahmen des Gegenstands des unabhängigen Anspruchs erfindungswesentlich sein können.

Im Einzelnen zeigt
- Figur 1: einen Adapterring in einer Ansicht schräg zur Leitungsrichtung blickend;
- Figur 2: einen Adapterring gemäß Figur 1 in einer Seitenansicht;
- Figur 3: einen Adapterring gemäß den Figuren 1 und 2 in einer Schnittdarstellung;
- Figur 4: eine Leitungsdurchführung, in die ein Adapterring gemäß den vorstehenden Figuren eingesetzt ist;
- Figur 5: eine Leitungsdurchführung gemäß Figur 4 mit eingesetztem Adapterring und darin vorgesehener Pressdichtung;
- Figur 6: einen Adapterring ohne Kragen in Schrägansicht.

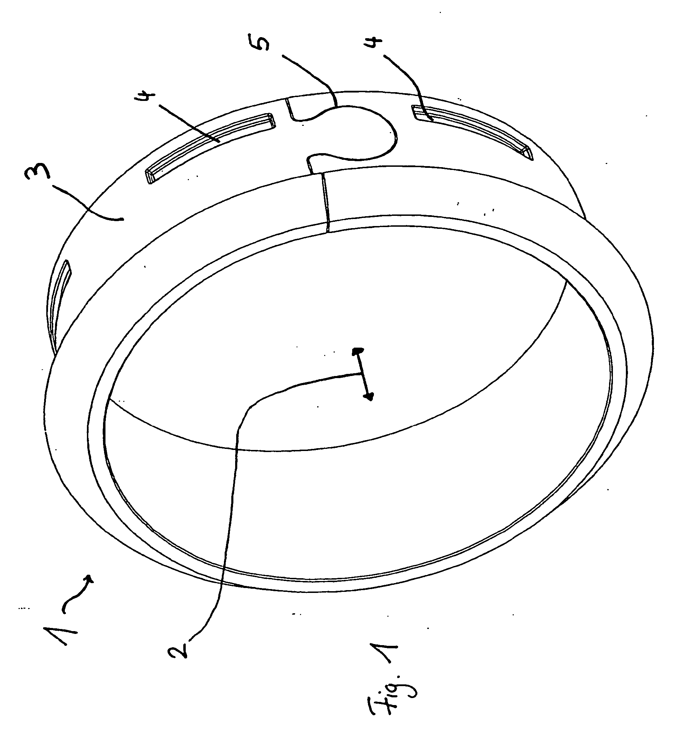

Figur 1 zeigt einen Adapterring 1 in einer Schrägansicht, also schräg zur Leitungsrichtung 2 blickend. Sofern in dieser Offenbarung auf die Leitungsrichtung 2 oder einen Abstand zu der Leitung Bezug genommen wird, impliziert dies nicht, dass eine Leitung auch tatsächlich hindurchgeführt sein muss, sondern wird eine Geometrie beschrieben, als ob eine Leitung hindurchgeführt wäre. Der Adapterring 1 wird also in Leitungsrichtung 2, und zwar in die Zeichenebene hinein, in ein Rohrelement einer Leitungsdurchführung gesetzt und liegt dann mit einer Adapterringaußenwand 3 flächig an der Rohrelementinnenwand an.

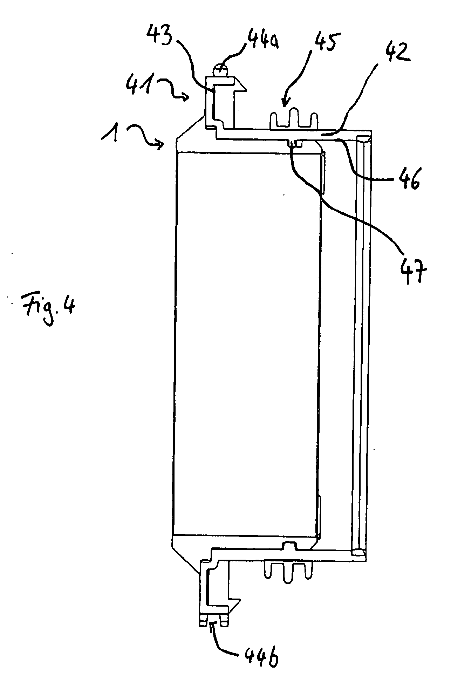

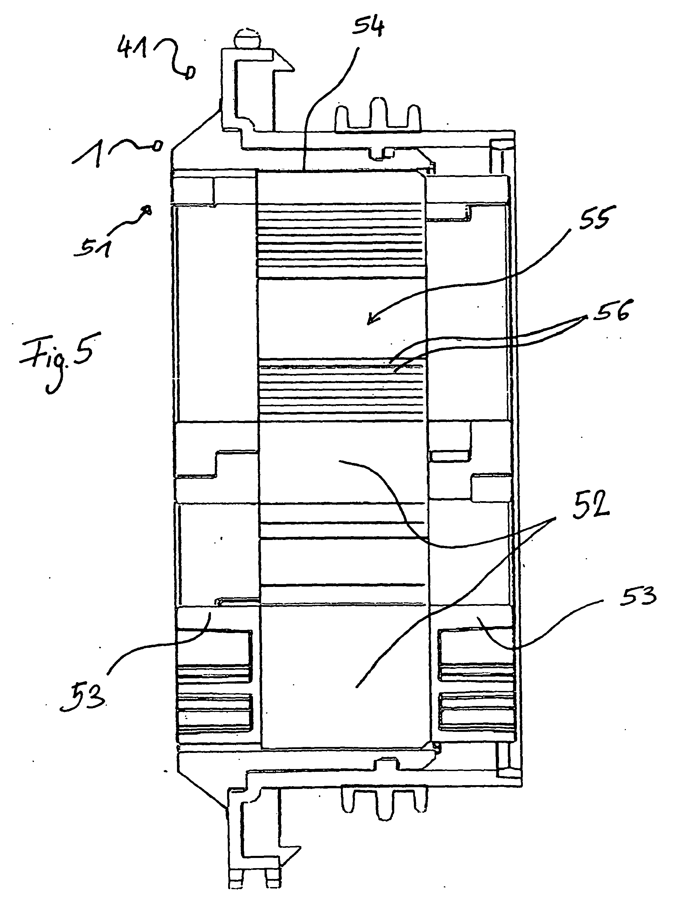

In der Adapterringaußenwand 3 sind Ausnehmungen 4 vorgesehen, in denen dann, wie im Einzelnen anhand der Figuren 4 und 5 veranschaulicht, an dem Rohrelement (der Leitungsdurchführung) ausgebildete Vorsprünge angeordnet sind.

Den Adapterring 1 durchsetzt eine Trennlinie 5, die in der Umlauffläche eine hier tropfenförmig ausgestaltete Hinterschneidung bildet. Indem nun die durch die Trennlinie 5 voneinander getrennten, einander gegenüberliegenden Kanten des Adapterrings 1 senkrecht zur Leitungsrichtung 2 in jeweils eine andere Richtung bewegt werden, kann der Halt der Hinterschneidung gelöst und der Adapterring 1 aufgeklappt werden. Bei diesem Aufklappen werden die durch die Trennlinie 5 voneinander getrennten Kanten dann bezogen auf die Umlaufrichtung voneinander weg bewegt, wobei die der Trennlinie 5 gegenüberliegende Adapterringseite eine Art Scharnier mit Schwenkachse bildet, und zwar aufgrund der elastischen Verformbarkeit des Kautschukmaterials (EPDM).

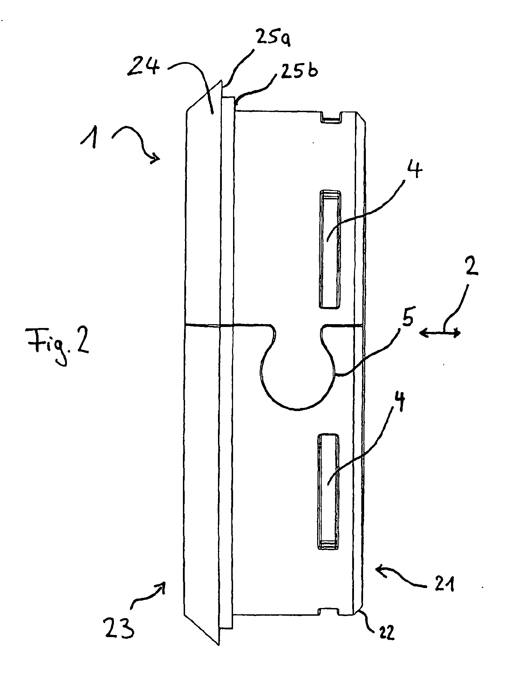

Figur 2 zeigt den Adapterring 1 in einer Seitenansicht, also senkrecht zur Leitungsrichtung 2 blickend, und zwar auf die Trennlinie 5. Der Adapterring 1 ist an der Stirnseite 21 mit welcher er in das Rohrelement eingeschoben wird, angefast. Die so gebildete schräge Fläche 22 rutscht beim Einsetzen leichter in das Rohrelement der Leitungsdurchführung.

An der entgegengesetzten Stirnseite 23 des Elastomerkörpers 1 ist ein nach außen hervortretender, umlaufender Kragen 24 vorgesehen, der einen Anschlag 25a, b bildet, bis zu welchem der Adapterring 1 dann in das Rohrelement der Durchführungshülse eingeschoben wird.

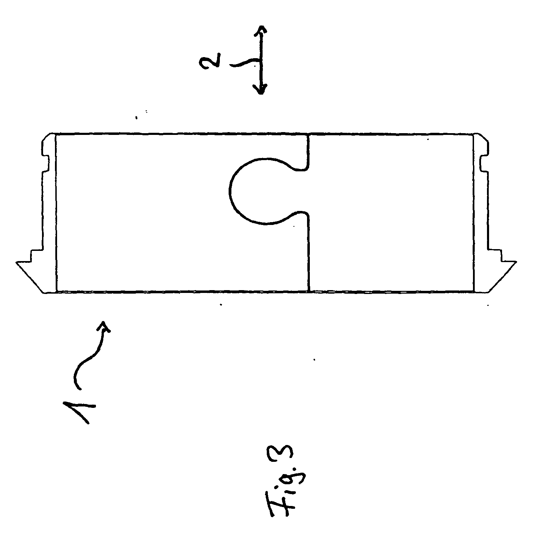

Figur 3 veranschaulicht den Aufbau des Adapterrings 1 in einer die Leitungsrichtung 2 beinhaltenden Schnittebene, lässt also insbesondere das Profil des Adapterrings 1 erkennen.

Figur 4 zeigt eine Leitungsdurchführung 41 mit einem Rohrelement 42 und einem an dieses anschließenden, nach dem Einbetonieren mit der Wandfläche bündigen Flansch 43. Über an dem Flansch 43 vorgesehene Befestigungsmittel 44a, b kann die Leitungsdurchführung 41 mit weiteren Leitungsdurchführungen zu einem Durchführungssatz zusammengesteckt und als solcher einbetoniert werden. Um nach dem Einbetonieren Kriechwege entlang der Rohrelementaußenwandfläche zu verlängern, ist eine umlaufende 3-Stegdichtung 45 vorgesehen.

An der Rohrelementinnenwand 46 sind umlaufend verteilt mehrere Vorsprünge 47 vorgesehen, die (ansonsten) den männlichen Teil eines Bajonettverschluss bilden. Erfindungsgemäß wird jedoch kein dazu passender Systemdeckel mit weiblichen Bajonettverschlusstellen eingesetzt, sondern ein anhand der Figuren 1 bis 3 erläuterter Adapterring 1. Die Vorsprünge 47 sind dann in den Ausnehmungen 4 angeordnet, und die Adapteningaußenwand 3 liegt großflächig an der Rohrelementinnenwand 46 an. Der Adapterring 1 ist bis zu einer Anlage des Anschlags 25a an einer Flanschaußenseite und einer Anlage des Anschlags 25b an einer zwischen Flansch 43 und Rohrelement 42 ausgebildeten Stufe eingeschoben.

In der in Figur 4 gezeigten Situation, also Im Falle eines eingesetzten Adapterrings 1, ist bereits die Leitung durch das Rohrelement 42 hindurchgeführt; der aufklappbare Adapterring 1 wird auf die zuvor hindurchgeführte Leitung gesetzt. Der Übersichtlichkeit halber ist die Leitung in den Figuren 4 und 5 nicht gezeigt.

Dementsprechend zeigt Figur 5 (von der nicht dargestellten Leitung abgesehen) dann eine Leitungsdurchführung 41 mit eingesetztem Adapterring 1 und in diesem vorgesehener Pressdichtung 51. Die Pressdichtung 51 ist aus einem Elastomerkörper 52 aufgebaut, der mit bezogen auf die Leitungsrichtung 2 beidseits davon vorgesehenen Spannplatten 53 in Leitungsrichtung 2 komprimiert werden kann und dabei senkrecht zur Leitungsrichtung 2 expandiert, sich also dichtend an die Adapterringinnenwand 54 und die Leitung anlegt. Hierbei wird gleichzeitig eine (anteilige) Anpresskraft zwischen Adapterringaußenwand 3 und Rohrelementinnenwand 46 aufgebaut, sodass auch zwischen Adapterring 1 und Leitungsdurchführung 41 eine dichtende Anlage entsteht.

Für die nicht gezeigte Leitung ist in dem Elastomerkörper 52 eine Durchgangsöffnung 55 vorgesehen, deren Durchmesser mittels heraustrennbarer Segmentringe 56 angepasst werden kann. Die Pressdichtung 51 ist also mit einer Vielzahl unterschiedlicher Leitungsquerschnitte kombinierbar und kann, weil der Elastomerkörper 52 geteilt ist und auch die Spannplatten 53 dementsprechend geteilt sind, aufgeklappt und auf eine bereits verlegte Leitung gesetzt werden. Es kann also zunächst die Leitung durch das Rohrelement 42 hindurchgeführt und anschließend der Adapterring 1 eingesetzt und die Pressdichtung 51 montiert werden.

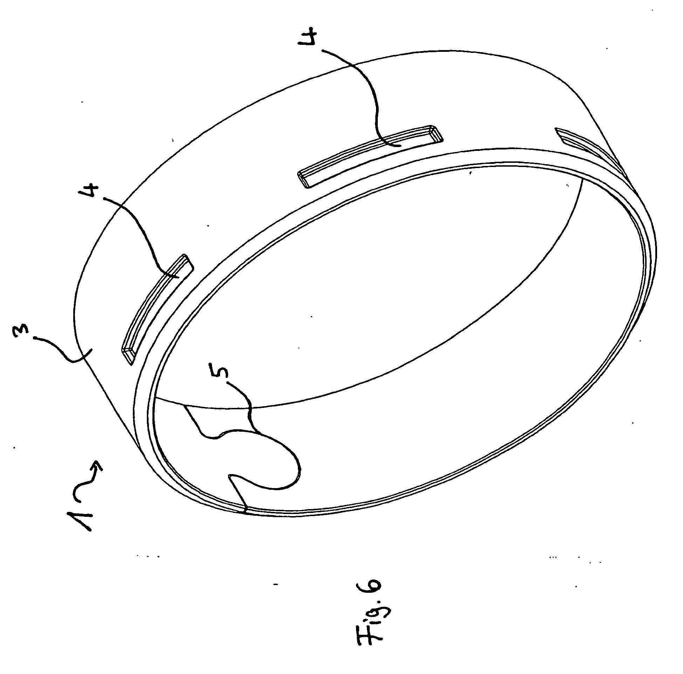

Figur 6 zeigt einen alternativen Adapterring 1, der ebenfalls von einer Trennlinie 5 durchteilt und somit aufklappbar ist. Gleichermaßen sind in der Adapterringaußenwand 3 Ausnehmungen 4 vorgesehen, die dann den männlichen Teil eines Bajonettverschlusses aufnehmen: Der in Figur 6 gezeigte Adapterring 1 weist jedoch keinen Kragen mit Anschlag auf; die bezogen auf die Leitungsrichtung 2 passende Montageposition wird allein durch das Ineinandergreifen von männlichem Bajonettverschluss und Ausnehmung 4 vorgegeben.

## Patentansprüche

1. Verwendung eines Adapterrings (1) zum Einsetzen in ein Rohrelement (42) einer Leitungsdurchführung (41),
wobei der Adapterring (1) mit einer Adapterringaußenwand (3) flächig an einer Rohrelementinnenwand (46) anliegt und dabei eine von einer Adapterringinnenwand (54) begrenzte Durchlassöffnung freigibt, in die eine Pressdichtung (51) mit einem Elastomerkörper (52) eingesetzt und so darin verspannt wird, dass der Elastomerkörper (52) an der Adapterringinnenwand (54) anliegt, wobei der Adapterring (1) als zu dem Elastomerkörper (52) gesondertes Bauteil derart ausgelegt ist, dass er ohne eigene Verspanneinrichtung infolge einer Expansion des Elastomerkörpers (52) senkrecht zur Leitungsrichtung (2) gegen die Rohrelementinnenwand (46) verpresst und so in der Durchlassöffnung gehalten wird.

2. Verwendung nach Anspruch 1, wobei die Adapterringinnenwand (54) als plane Kreiszylinderinnenmantelfläche ausgebildet ist.

3. Verwendung nach Anspruch 1 oder 2, wobei in der Adapterringaußenwand (3) eine Ausnehmung (4) vorgesehen ist, die einen an der Rohrelementinnenwand (46) ausgebildeten Vorsprung (47) aufnimmt.

4. Verwendung nach Anspruch 3, wobei die Ausnehmung (4) zu beiden Stirnseiten des Adapterrings (1) beabstandet ist, sodass der Adapterring (1) beim Einsetzen vorübergehend elastisch verformt wird.

5. Verwendung nach einem der vorstehenden Ansprüche, wobei an einer Stimseite des Adapterrings (1) ein äußerer, vorzugsweise umlaufender Kragen (24) vorgesehen ist, der einen Anschlag (25a, b) zur Verfügung stellt, bis zu welchem der Adapterring (1) in das Rohrelement (42) eingeschoben wird.

6. Verwendung nach einem der vorstehenden Ansprüche, wobei durch den Adapterring (1) eine Trennlinie (5) verläuft, entlang der er aufgeklappt wird, wonach er ohne Durchfädeln der Leitung auf diese aufgesetzt wird.

7. Verwendung nach Anspruch 6, wobei die Trennlinie (5) eine hinterschnittene Ausnehmung und einen dazu im Eingriff passenden Vorsprung der sich gegenüberliegenden, durch die Trennlinie (5) voneinander getrennten Kanten des Adapterrings (1) bildet.

8. Verwendung nach einem der vorstehenden Ansprüche, wobei der Adapterring (1) aus einem Kunststoff, vorzugsweise einem von EPDM und TPE, mit einer Shore-Härte von mindestens 70 Shore, vorzugsweise mindestens 80 Shore, und höchstens 95 Shore, vorzugsweise höchstens 90 Shore, gebildet ist.

9. Verwendung nach einem der vorstehenden Ansprüche, wobei eine Stirnseite des Adapterrings (1) angeschrägt ist und der Adapterring (1) mit der angeschrägten Stirnseite in das Rohrelement (42) eingeschoben wird.

10. Verwendung nach einem der vorstehenden Ansprüche, wobei das Rohrelement (42) der Leitungsdurchführung (41) in einem Wandelement baulich integriert ist, und zwar durch zunächst fließfähiges und dann erstarrtes Material, insbesondere Beton.

## Claims

1. A use of an adapter ring (1) for an insertion into a tube element (42) of a conduit duct (41),
wherein said adapter ring (1) contacts with an adapter ring outer wall (3) a tube element inner wall (46) two-dimensionally and, therein, provides a through-opening defined by an adapter ring inner wall (54), into which through-opening press seal (51) having an elastomer body (52) is inserted and tensioned in such a way that said elastomer body (52) contacts said adapter ring inner wall (54),
wherein said adapter ring is a part separate from the elastomer body (52) and is provided in such a way that it is held in the through-opening without having an own tensioning device, namely as a result of being pressed against said tube element inner wall (46) due to an expansion of said elastomer body (52) perpendicularly to a conduit direction (2).

2. The use according to claim 1, wherein said adapter ring inner wall (54) is provided as a plain inner lateral surface of a cylinder having a circular cross-section.

3. The use according to claim 1 or 2, wherein a recess (4) is provided in said adapter ring outer wall (3), which receives a projection (47) provided at said tube element inner wall (46).

4. The use according to claim 3, wherein said recess (4) is provided distant to two faces of said adapter ring (1) so that said adapter ring (1) is elastically deformed temporarily during said insertion.

5. The use according to one of the preceding claims, wherein at one face of said adapter ring (1) an outer collar (24) is provided, preferably circumferentially, which collar (24) provides a stop (25a,b) up to which said adapter ring (1) is pushed into said tube element (42).

6. The use according to one of the preceding claims, wherein a separating line (5) extends through said adapter ring (1) so that said adapter ring (1) can be folded open and placed on said conduit without threading said conduit through.

7. The use according to claim 6, wherein said separating line (5) forms, at the edges of said adapter ring (1) separated by said separating line (5), an undercut-like recess and a protrusion fitting thereto.

8. The use according to one of the preceding claims, wherein said adapter ring (1) is made of a synthetic material, preferably one of EPDM and TPE, having a Shore hardness of at least 70 Shore, preferably at least 80 Shore, and 95 Shore at maximum, preferably 90 Shore at maximum.

9. The use according to one of the preceding claims, wherein a face of said adapter ring (1) is tapered and said adapter ring (1) is pushed into said tube element (42) with said tapered face.

10. The use according to one of the preceding claims, wherein said tube element (42) of said conduit duct (41) is structurally integrated into a wall element, namely by a material being pourable first and hardening then, particularly by concrete.

## Revendications

1. Utilisation d'une bague d'adaptation (1) pour insérer dans un élément de tuyau (42) d'un passage de conduite (41),
dans laquelle la bague d'adaptation (1) épouse, par une paroi extérieure (3) de bague d'adaptation, une paroi intérieure (46) de l'élément de tuyau et dégage ainsi une ouverture de passage délimitée par la paroi intérieure (54) de la bague d'adaptation, dans laquelle ouverture de passage un joint à compression (51) comportant un corps en élastomère (52) est inséré et calé de manière que le corps en élastomère (52) borde la paroi intérieure (54) de la bague d'adaptation, la bague d'adaptation (1) étant conçue sous la forme d'un élément distinct du corps en élastomère (52) de telle manière que celle-ci puisse être comprimée sans dispositif de calage propre à la suite d'une expansion du corps en élastomère (52) perpendiculairement à la direction de la conduite (2) contre la paroi intérieure (46) de l'élément de tuyau et puisse ainsi être maintenue dans l'ouverture de passage.

2. Utilisation selon la revendication 1, dans laquelle la paroi intérieure (54) de la bague d'adaptation est conçue sous la forme d'une surface d'enveloppe intérieure cylindrique circulaire plane.

3. Utilisation selon la revendication 1 ou 2, dans laquelle il est prévu un évidement (4), dans la paroi extérieure (3) de la bague d'adaptation, qui reçoit une saillie (47) constituée sur la paroi intérieure (46) de l'élément de tuyau.

4. Utilisation selon la revendication 3, dans laquelle l'évidement (4) est espacé des deux faces frontales de la bague d'adaptation (1) de manière que la bague d'adaptation (1) subisse une déformation élastique momentanée lors de son insertion.

5. Utilisation selon l'une des revendications précédentes, dans laquelle il est prévu, sur une face frontale de la bague d'adaptation (1), une collerette extérieure (24) de préférence périphérique qui constitue une butée (25a, b) jusqu'à laquelle la bague d'adaptation (1) peut être enfoncée dans l'élément de tuyau (42).

6. Utilisation selon l'une des revendications précédentes, dans laquelle la bague d'adaptation (1) est parcourue par une ligne de séparation (5) le long de laquelle la bague peut être ouvrée et posée sur la conduite après sans devoir être enfilée sur celle-ci.

7. Utilisation selon la revendication 6, dans laquelle la ligne de séparation (5) forme un évidement en contre-dépouille et une saillie, adaptée pour coopérer avec celui-ci, des bords adjacents de la bague d'adaptation (1) séparés l'un de l'autre par la ligne de séparation (5).

8. Utilisation selon l'une des revendications précédentes, dans laquelle la bague d'adaptation (1) est formée dans une matière plastique, de préférence une matière parmi l'EPDM ou le TPE, dont la dureté Shore est d'au moins 70 Shore, de préférence d'au moins 80 Shore, et au maximum de 95 Shore, de préférence au maximum de 90 Shore.

9. Utilisation selon l'une des revendications précédentes, dans laquelle une face frontale de la bague d'adaptation (1) est biseautée et la bague d'adaptation (1) est enfoncée dans l'élément de tuyau (42) par la face frontale biseautée.

10. Utilisation selon l'une des revendications précédentes, dans laquelle l'élément de tuyau (42) du passage de conduite (41) est intégré architecturalement dans un élément de paroi, à savoir dans un matériau tout d'abord fluide puis solidifié, notamment du béton.
